# EUROPÄISCHE PATENTSCHRIFT

(11) **EP 1 334 155 B1**
(45) Veröffentlichungstag und Bekanntmachung des Hinweises auf die Patenterteilung: **24.05.2006**
(21) Anmeldenummer: 01962533.4
(22) Anmeldetag: 17.09.2001
(51) Int. Cl.: C09B 67/00, C09D 11/00, C09D 11/02

(54) **VERFAHREN UND VORRICHTUNG ZUM HERSTELLEN VON DRUCKFARBEN**
METHOD AND DEVICE FOR PRODUCING PRINTING INKS
PROCEDE ET DISPOSITIF POUR PRODUIRE UNE ENCRE D'IMPRIMERIE

(30) Priorität: 17.11.2000 DE 10057327
(43) Veröffentlichungstag der Anmeldung: 13.08.2003
(73) Patentinhaber: Bühler AG, 9240 Uzwil (CH)
(72) Erfinder: STALDER, Bernhard, CH-9244 Niederuzwil (CH); HALTER, Roland, CH-9000 St.Gallen (CH); ALMER, Walter, CH-9242 Oberuzwil (CH); TSCHUDY, Roland, CH-9242 Oberuzwil (CH)
(74) Vertreter: Frommhold, Joachim
(86) Internationale Anmeldenummer: PCT/CH2001/000558
(87) Internationale Veröffentlichungsnummer: WO 2002/040606

(56) Entgegenhaltungen:
- EP-A- 0 219 323
- EP-A- 0 285 713
- EP-A- 0 341 054
- WO-A-01/19926
- DE-A- 2 746 710
- DE-A- 3 715 836
- US-A- 4 474 473
- DATABASE WPI Section Ch, Week 199039 Derwent Publications Ltd., London, GB; Class G02, AN 1990-293192 XP002211701 -& JP 02 029476 A (TOYODA AUTOMATIC LOOM CO LTD), 31. Januar 1990 (1990-01-31)

## Beschreibung

Die Erfindung bezieht sich auf ein Verfahren und eine Vorrichtung zum Herstellen von Druckfarben oder Druckfarbenkonzentraten gemäss Anspruch 1 bzw. 18.

Bei der Herstellung von Druckfarben verwendet man Farbpigmente, bei deren Synthese ein Kopplungsschritt in einem verdünnten wässrigen Medium stattfindet, so dass nach der Synthese Molekül-Aggregate in wässrigem Medium vorliegen, die eine Suspension bzw. Aufschlämmung von Feststoff-Partikeln bilden. Der bei der Synthese erreichbare Pigment-Gewichtsanteil liegt daher lediglich bei einigen Prozent. Die Moleküle, aus denen diese Farbpigmente bestehen, gehören z.B. zur Gruppe der Azoverbindungen oder der Gruppe polycyclischer Verbindungen. Typische Beispiele sind Monoazogelb-, Monoazoorange-, Disazo-, β-Naphthol-, Naphthol-AS-, Benzimidazolon-, Disazo-Kondensations-, Metallkomplex-, Isoindolinon- oder Isoindolin-Pigmente als Vertreter der Azoverbindungen bzw. Phthalocyanin-, Chinacridon-, Perylen-, Perinon-, Thioindigo-, Anthrachinon-, Anthrapyrimidin-, Flavanthron-, Pyranthron-, Anthanthron-, Dioxazin-, Triarylcarbonium-, Chinophthalon- oder Diketopyrrolopyrrol-Pigmente als Vertreter der polycyclischen Verbindungen.

Da diese farbgebenden Stoffe nicht gelöst in Molekülform, sondern als aus diesen Molekülen aufgebaute organische Kristalle vorliegen, hängen ihre physikalischen Eigenschaften und insbesondere ihre Farbeigenschaften nicht nur von der jeweiligen Molekülstruktur, sondern auch noch zusätzlich von der Beschaffenheit der jeweiligen Kristallstruktur ab. So gibt es z.B bei Pigmenten aus Kupfer(II)-Phthalocyanin eine rotstichig-blaue α-Modifikation, eine grünstichig-blaue β-Modifikation und eine rotstichigblaue ε-Modifikation, während bei Pigmenten aus unsubstituiertem linearem Chinacridon eine rotviolette β-Modifikation und eine rote γ-Modifikation vorliegen.

Die Farbeigenschaften dieser Pigmente können einerseits durch gezielte Substitution einzelner Bestandteile ihrer Moleküle im Synthesereaktor bestimmt werden. Andererseits lassen sich aber auch ihre Farbeigenschaften noch nach der Synthese bei der Weiterverarbeitung zu Druckfarben durch Umwandlung von der einen in eine andere Kristallmodifikation beeinflussen, indem man für den Prozess die für die jeweilige Modifikation notwendigen physikalischen Bedingungen (in erster Linie Temperatur, Druck) entsprechend auswählt und einhält.

Ein weiterer wichtiger Gesichtspunkt bei der Druckfarbenherstellung ist die Pigmentgrösse. In der Regel bevorzugt man besonders kleine Pigmente.

Bei der konventionellen Druckfarbenherstellung wird z.B. die aus der Synthese stammende wässrige Aufschlämmung (slurry) in einer Filterpresse zu einem Pigment-Presskuchen verarbeitet, dessen Pigmentanteil etwa 20-30 Gew.-% beträgt. In dem herausgepressten Wasser wird ein Teil der aus der Synthese stammenden Salze abgeführt.

Dieser Presskuchen mit seinem immer noch hohen Wasseranteil (70-80 Gew.-%) wird dann (a) entweder in einem Trockner getrocknet und anschliessend im trockenen Zustand vermahlen, so dass man ein Pulver-Pigment enthält, das zusammen mit einem Bindemittel (z.B. Öl) als Endprodukt ein "Pigment-Konzentrat" darstellt. Oder aber (b) der Presskuchen wird in einem Kneter mit dem Bindemittel vermischt, wobei aufgrund der höheren Affinität des Bindemittels zu den Pigmenten eine Umbenetzung (flushing) des Pigments aus der hydrophilen Phase (Wasser) in die lipophile Phase (Bindemittel) stattfindet, so dass weiteres Wasser als pigmentfreie gesonderte Phase freigesetzt wird und dekantiert werden kann, wobei man mehrmals hintereinander kneten und dekantieren muss, um das Wasser aus dem Produkt weitgehend zu entfernen. Das Endprodukt ist hier dasselbe wie bei (a), wird aber in der Regel als Pigment-Paste oder "Flush-Paste" bezeichnet.

Das Umbenetzen (Flushen) erspart zwar die energieintensiven Schritte der Trocknung und anschliessenden Vermahlung, dafür muss man aber in mehreren Schritten kneten und dekantieren. Das Kneten ist ebenfalls ein sehr energieintensiver und unwirtschaftlicher Verfahrensabschnitt. In der Regel muss auch das Bindemittel in mehreren Etappen nach diesen Schritten zugeführt werden, um den gewünschten niedrigen Wassergehalt des Endprodukts zu erzielen. Zur Entfernung des Restwassers aus dem Produkt in dem Kneter muss ausserdem erhitzt und unter Vakuum entgast werden. Dennoch ist es schwierig, einen Wassergehalt unter etwa 3 Gew.-% zu erzielen.

Es gibt noch weitere bekannte Verfahren zum Umbenetzen (Flushen) organischer Pigmente:

Die EP-A-0 219 323 beschreibt ein Verfahren zur Herstellung einer Dispersion organischer Pigmente. Die Dispersion der organischen Pigmente wird in einem nicht-wässrigen Medium unmittelbar aus einer wässrigen Aufschlämmung gewonnen, die 0,1 bis 20 Gewichtsprozent des Pigments enthält, indem man die wässrige Aufschlämmung mit dem nicht-wässrigen Medium unter starkem Rühren mischt und anschliessend die Dispersion der organischen Pigmente von der restlichen wässrigen Phase isoliert. Der erste Schritt des Verfahrens erfolgt in einem Hochgeschwindigkeitsrnischer, in dem die wässrige Phase mit der öligen Phase vermischt wird. Der zweite Schritt des Verfahrens erfolgt in einem Zweiwalzwerk, bei dem eine Walze aus Stahl und die andere aus Kupfer besteht. Da die organische Phase eine grössere Affinität für die Kupferoberfläche hat und die wässrige Phase eine grössere Affinität für die Stahloberfläche hat, werden die beiden Phasen indem Zweiwalzwerk getrennt.

Die EP-A-0 341 054 beschreibt ebenfalls ein Verfahren zum Herstellen von Druckfarben. Auch hier handelt es sich um ein nicht-kontinuierliches Verfahren, bei dem zunächst eine wässrige Pigmentaufschlämmung mit einem in Toluol gelösten Lack vermischt wird. Dieses Vermischen erfolgt in einem vierblättrigen Propeller-Rührer oder einem zwei blättrigen Paddel-Rührer, worauf hin die klare Wasserlösung im oberen Teil des Gefässes dekantiert wird, während die mit Pigmenten angereicherte und Restwasser enthaltende Masse einem Sigmablatt-Doppelarmmischer zum Auswaschen und Entfernen des Wassers zugeführt wird.

Die DE-A-37 15 836 beschreibt ein Verfahren zur Herstellung von Alkall-Blautoner. Auch hier erfolgt das Umtaenetzen des Alkall-Blaus durch Kneten mit einem hydrophoben Bindemittel, wodurch eine Entwässerung erfolgt und das Alkali-Blau in Pastenforaxe überführt wird. Das frei wrerdende Wasser wird auch hier mittels Dekantieren entfernt.

Die JP-A-2 029 476 beschreibt ebenfalls ein Verfahren zur Herstellung hochviskoser Druckfarben. Auch hier wird die wässrige Ausschlämmung mit einem Trägermaterial für Druckfarbe in einer Rührvorrichtung vermischt, die einen vertikalen Zylinder aufweist, in dem eine drehbare Welle angeordnet ist.

Die WO-A-01/19926 beschreibt ein Verfahren zum Herstellen einer Pigmentpaste. Dabei wird zunächst ein Pigmentpresskuchen hergestellt, der anschliessend in einen Zweiwellenextruder eingespeist wird, indem die Umbenetzung der Pigmente des Presskuchens mit einem organischen Bindemittel erfolgt. Ein Nachteil dieses Verfahrens besteht darin, dass der nicht-fliessfähige Pigmentpresskuchen zunächst fluidisiert werden muss, bevor er dem Zweiwellenextruder für die Umbenetzung zugeführt werden kann. Für die Fluidisierung des Pigmentpresskuchens ist allerdings ebenfalls apparativer Aufwand erforderlich. Ausserdem ist das Gesamtverfahren ebenfalls nicht kontinuierlich.

Neben dem unsinnig hohen Energieaufwand bei der Trocknung bzw. beim Kneten weisen diese konventionellen Verfahren zahlreiche "Übergabestellen" auf, bei denen das Produkt von Verfahrensabschnitt zu Verfahrensabschnitt "weitergereicht" werden muss, wodurch das Gesamtverfahren letztendlich unwirtschaftlich wird und zudem die Gewährleistung einer einheitlichen Qualität des Endprodukts erschwert wird.

Der Erfindung liegt somit die Aufgabe zugrunde, ein Verfahren und eine Vorrichtung zur Druckfarbenherstellung bereitzustellen, wodurch die weiter oben genannten Nachteile des Stands der Technik vermieden werden können.

Gegenstand der vorliegenden Anmeldung ist somit ein Verfahren zum kontinuierlichen Herstellen einer Druckfarbe oder eines Druckfarbenkonzentrats, bei dem der Reihe nach:
- eine lipophile Farbpigmente enthaltende wässrige Aufschlämmung und ein lipophiles Bindemittel einem ersten Bearbeitungsbereich zugeführt werden;
- der wässrigen Farbpigment-Aufschlämmung und dem Bindemittel, die dem ersten Bearbeitungsbereich zugeführt worden sind, in dem ersten Bearbeitungsbereich Scher- und Dehnströmungen aufgeprägt werden, so dass eine zumindest partielle Umbenetzung der lipophilen Farbpigmente aus der wässrigen Aufschlämmung mit dem lipophilen Bindemittel stattfindet;
- nach dem ersten Bearbeitungsbereich zum ersten Mal aus der wässrigen Aufschlämmung stammendes Wasser entfernt wird;
- die aus dem ersten Bearbeitungsbereich gewonnene teilentwässerte fliessfähige Masse einem zweiten Bearbeitungsbereich zugeführt wird, in welchem die fliessfähige Masse einer Scher-, Dehn- und Kompressionswirkung ausgesetzt wird und zum zweiten Mal mittels der partiellen Umbenetzung in dem ersten Bearbeitungsbereich als gesonderte Phase freigewordenes Wasser aus der fliessfähigen Masse entfernt wird; und
- die von dem Wasser weitgehend befreite fliessfähige Masse, in welcher die lipophilen Farbpigmente in dem lipophilen Bindemittel dispergiert sind, als Zwischen- oder Endprodukt entnommen und gesammelt wird,
dadurch gekennzeichnet, dass der erste Bearbeitungsbereich (51) ein Zwischenraum (1) zwischen zwei koaxialen Drehelementen (2; 3; 4, 5) ist, die relativ zueinander um ihre gemeinsame Achse (A) drehbar sind, und dass der zweite Bearbeitungsbereich (52) der Prozessraum eines Extruders ist.

Diese Aufgabe wird verfahrensrnässig durch Anspruch 1 und vorrichtungsmässig durch Anspruch 18 gelöst.

Erfindungsgemäss wird dabei im Gegensatz zum eingangs diskutierten Stand der Technik unter Verwendung eines Extruders, wie er z.B. aus der EP-A-0 560 033 oder aus der EP-A-0 490 056 bekannt ist, dem Produkt das Wasser nur nach und nach im Verlaufe des Verfahrens entzogen, so dass die Umbenetzung der Pigmente in der direkt aus dem Synthesereaktor stammenden dünnflüssigen Aufschlämmung im ersten Bearbeitungsbereich stattfindet. Somit erspart man sich im Gegensatz zu (a) den Energieaufwand einer Trocknung mit anschliessender Trockenvermahlung bzw. im Gegensatz zu (b) den hohen Energieaufwand des Knetens eines Presskuchens und die mehreren zeitraubenden Dekantiervorgänge im Wechsel mit erneutem Kneten.

Etwas vereinfacht gesagt, werden also bei der Erfindung zuerst die Pigmente umbenetzt und dann Salze aus dem Produkt ausgewaschen, während beim Stand der Technik zuerst gewaschen und dann umbenetzt wird.

Da das Produkt während des gesamten erfindungsgemässen Verfahrens in einem gut fliessbaren Zustand ist - vorzugsweise liegt es als wässrige Aufschlämmung unter 10% Pigmentanteil vor -, lässt sich mit der erfindungsgemässen Vorrichtung eine kontinuierliche Verfahrensführung ab Synthese (Farbpigment-Herstellung) in einem geschlossenen System bis zum Endprodukt (Druckfarben-Herstellung) erzielen.

Vorzugsweise wird beim erstmaligen Entfernen des Wassers schon ein Grossteil des in der fliessfähigen Masse im ersten Bearbeitungsbereich enthaltenen Wassers entfernt, und es wird in dem zweiten Bearbeitungsbereich der fliessfähigen Masse erneut Wasser hinzugegeben, wobei bevorzugt destilliertes, ggfs. auch erhitztes Wasser verwendet wird. Dadurch lassen sich besonders gut die im Produkt enthaltenen Salze auswaschen.

Zweckmässigerweise wird dann in dem zweiten Bearbeitungsbereich nach der zweiten Wasserentnahme ein drittes Mal Wasser entnommen, wobei die fliessfähige Masse nach der zweiten Wasserentnahme vorzugsweise mässig erhitzt wird und die dritte Wasserentnahme in Form einer Entgasung von Wasserdampf stattfindet. Besonders vortielhaft ist es, wenn die dritte Wasserentnahme aus dem zweiten Bearbeitungsbereich mittels eines Vakuums im Bereich der dritten Wasserentnahme unterstützt wird. Auf diese Weise erhält man ein Produkt mit sehr geringem Wasseranteil.

Zweckmässigerweise liegen die in dem ersten Bearbeitungsbereich wirkenden Scherraten im Bereich von 1000/s bis 100.000/s, vorzugsweise 1000/s bis 50.000/s, wobei vorzugsweise die Intensität der Scher- und/oder Dehnströmung in dem ersten Bearbeitungsbereich stetig von einem Minimum auf ein Maximum ansteigt und anschliessend stetig oder abrupt wieder abnimmt.

Typischerweise handelt es sich bei den lipophilen Farbpigmenten um Feststoffe, die bei der Umbenetzung in dem ersten Bearbeitungsbereich von der wässrigen Phase in die ölige Phase eines öligen Bindemittels übergehen. Dabei können auch mehrere Bindemittel miteinander vermischt werden, bevor sie mit einer weiteren Flüssigkeit mit fein verteilten Feststoffen vermischt werden.

Bei einer besonders bevorzugten Ausführung des erfindungsgemässen Verfahrens beträgt in dem ersten Bearbeitungsbereich die maximale Scherrate in einem ersten Teilbereich höchstens etwa das 5-fache der minimalen Scherrate in einem zweiten Teilbereich des ersten Bearbeitungsbereichs und ist das Volumen des ersten Teilbereichs höchstens etwa das 3-fache des Volumens des zweiten Teilbereichs.

Die Temperartur in dem ersten Bearbeitungsbereich beträgt 0 bis 200°C, vorzugsweise 40 bis 90°C. Dadurch wird verhindert, dass die teilweise wenig hitzebeständigen organischen Moleküle der Pigmente zerfallen, was selbst beim Zerfall nur eines kleinen Anteils der Moleküle zu Farbverfälschungen beim Endprodukt führt.

In ersten und/oder in zweiten Bevorheitungs findet eine Temperaturerfassung statt.

Vorzugsweise werden der fliessfähigen Masse im zweiten Bearbeitungsbereich weitere Bindemittel und/oder Öle sowie Druckfarben-Additive hinzugegeben, so dass man eine fertige Druckfarbe erhält.

Zweckmässigerweise sind bei der erfindungsgemässen Vorrichtung die beiden koaxialen Drehelemente jeweils ein Zylinder und ein Konus oder jeweils ein Konus, so dass sich der Zwischenraum (erster Bearbeitungsbereich) zwischen den koaxialen Drehelementen in der Produkt-Förderrichtung verjüngt oder erweitert, wobei vorzugsweise eines der Drehelemente ein Rotor und das andere ein Stator ist. Dies ermöglicht eine wirkungsvolle und schonende Umbenetzung der Pigmente in dem ersten Bearbeitungsbereich.

Arbeitet man mit Scherraten unterhalb etwa 3000/s, so werden vorzugsweise Kollisionskörper (Kügelchen) im Zwischenraum verwendet, während bei Scherraten von mehr als etwa 3000/s auf Kollisionskörper im Zwischenraum verzichtet werden kann.

Bei einer besonders bevorzugten Ausführung der erfindungsgemässen Vorrichtung befinden sich an der Oberfläche des jeweiligen Drehelements stiftartige Erhebungen, die sich in den Zwischenraum erstrecken und die sich bei Drehung der Drehelemente aneinander vorbei bewegen, wobei sich bei Bedarf in dem Zwischenraum Kollisionskörper (z.B. Kugeln) befinden, die mit der Oberfläche und/oder den stiftartigen Erhebungen der Drehelemente zusammenstossen können. Dies trägt zu einer Intensivierung der Durchmischung während der Umbenetzung bei.

Vorzugsweise lässt sich die Spaltbreite des Zwischenraums durch eine Verschiebung der beiden Drehelemente zueinander entlang ihrer gemeinsamen Drehachse A einstellen. Durch geeignete Kombination der Rotordrehzahl und der Spaltbreite lassen sich über einen grossen Bereich geeignete Scherraten im Zwischenraum des ersten Bearbeitungsbereichs einstellen. Ein zweckmässiger Einstellbereich für die Spaltbreite erstreckt sich zwischen etwa 1 mm bis zu etwa 5 mm.

der Prozessraum eines Extruders, wobei der erste Bearbeitungsbereich und der zweite Bearbeitungsbereich unmittelbar aufeinanderfolgend koaxial angeordnet sein können, und zwar so, dass die Drehachse A und die Längsachse des Extruders kolinear sind. Als Extruder kann ein Mehrwellenextruder verwendet werden.

Gegenstand der vorliegenden Anmeldung ist somit auch eine Vorrichtung zum kontinuierlichen Herstellen einer Druckfarbe oder eines Druckfarbenkonzentrats, mit:
- einem ersten Bearbeitungsbereich (51), dem eine lipophile Farbpigmente enthaltende wässrige Aufschlämmung und ein lipophiles Bindemittel zuführbar ist;
- einem Mittel (2, 3), mit dem der wässrigen Farbpigment-Aufschlämmung und dem Bindemittel, die dem ersten Bearbeitungsbereich (51) zuführbar sind, in dem ersten Bearbeitungsbereich Scher- und Dehnströmungen aufprägbar sind, so dass eine zumindest partielle Umbenetzung der lipophilen Farbpigmente aus der wässrigen Aufschlämmung mit dem lipophilen Bindemittel ermöglicht wird;
- einem Mittel, mit dem am Ende (51a) des ersten Bearbeitungsbereiches (51) zum ersten Mal aus der wässrigen Aufschlämmung stammendes Wasser entfernt werden kann;
- einem Mittel, mit dem die aus dem ersten Bearbeitungsbereich (51) gewonnene teilentwässerte fliessfähige Masse einem zweiten Bearbeitungsbereich (52) zuführbar ist, in welchem die fliessfähige Masse einer Scher-, Dehn- und Kompressionswirkung ausgesetzt werden kann, und zum zweiten Mal mittels der partiellen Umbenetzung in dem ersten Bearbeitungsbereich als gesonderte Phase freigewordenes Wasser aus der fliessfähigen Masse entfernt werden kann; und
- einem Mittel, mit dem die von dem Wasser weitgehend befreite Masse, in welcher die lipophilen Farbpigmente in dem lipophilen Bindemittel dispergiert sind, als Zwischen- oder Endprodukt entnommen und gesammelt werden kann,
dadurch gekennzeichnet, dass der erste Bearbeitungsbereich (51) ein Zwischenraum (1) zwischen zwei koaxialen Drehelementen (2; 3; 4, 5) ist, die relativ zueinander um ihre gemeinsame Achse (A) drehbar sind, und dass der zweite Bearbeitungsbereich (52) der Prozessraum eines Extruders ist.

Eine besonders kompakte Ausführung der erfindungsgemässen Vorrichtung zeichnet sich dadurch aus, dass das Gehäuse der aufeinanderfolgenden Bearbeitungsbereiche ein gemeinsames einstückiges Gehäuse ist, dessen stromaufseitiger erster Gehäuseabschnitt dem Stator entspricht und dessen stromabseitiger zweiter Gehäuseteil dem Extrudergehäuse entspricht. Mit dieser Ausführung lassen sich Verbindungsleitungen bzw. Verbindungskanäle einsparen.

Weitere Vorteile, Merkmale und Anwendungsmöglichkeiten der Erfindung ergeben sich aus der nun folgenden Beschreibung anhand der Zeichnung, wobei:
- Fig. 1: eine schematische Darstellung der Verfahren gemäss dem Stand der Technik ist;
- Fig. 2: eine schematische Darstellung des Verfahrens gemäss der Erfindung ist; und
- Fig. 3a und 3b: eine schematische Darstellung jeweils einer Ausführungsform eines Teils der erfindungsgemässen Vorrichtung ist.

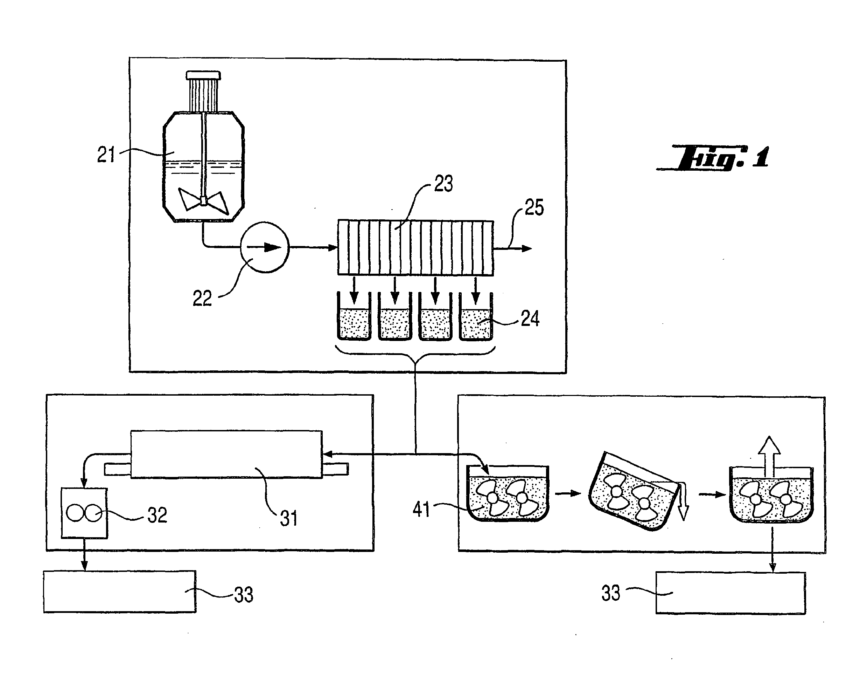

Fig. 1 zeigt zwei Verfahren des Stands der Technik. Bei beiden Verfahren werden die bei der Synthese im Reaktor 21 in wässriger Emulsion (Aufschlämmung, Slurry) gewonnenen Farbpigmente mittels einer Pumpe 22 einer Filterpresse 23 zugeführt und zu Pigment-Presskuchen 24 mit einem Wassergehalt von 70-80% gepresst, wobei mit dem herausgepressten Abwasser 25 auch ein Teil der Salze aus dem Syntheseprodukt abgeführt wird.

Bei einem der bekannten Verfahren (linker Zweig) wird dieser Pigment-Presskuchen 24 einem Trockner 31 zur Trocknung zugeführt, woraufhin die getrocknete Masse einem Walzenstuhl 32 zur Trockenvermahlung zugeführt wird. Die Trockenvermahlung ergibt ein Pulver-Pigment 33. In einem weiteren (nicht dargestellten) Verfahrensschritt wird dieses Pulverpigment dann mit einem lipophilen Bindemittel und ggfs. mit Druckfarben-Additiven versetzt.

Bei dem anderen der bekannten Verfahren (rechter Zweig) wird dieser Pigment-Presskuchen 24 zusammen mit einem lipophilen Bindemittel in einen Z-Kneter 41 gebracht und gründlich durchgeknetet, wobei von Zeit zu Zeit das aufgrund der Umbenetzung freiwerdende Wasser zusammen mit Salzen dekantiert wird. In einem weiteren Schritt wird der Inhalt des Z-Kneters 41 unter Vakuum entgast. Man erhält eine ölige Pigment-Paste 33, auch "Flush-Paste" genannt, die dann ebenfalls in einem weiteren (nicht dargestellten) Verfahrensschritt ggfs. mit Druckfarben-Additiven versetzt wird.

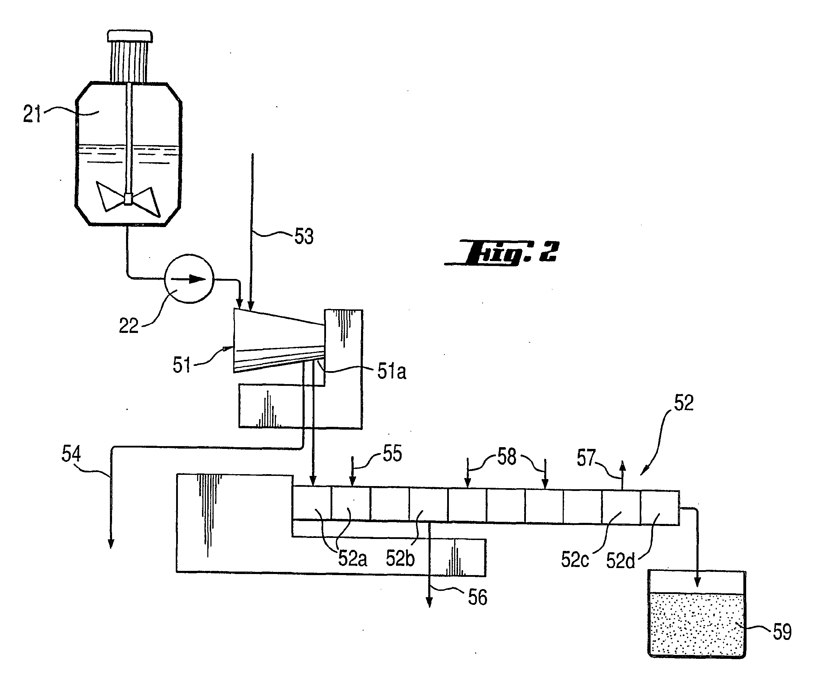

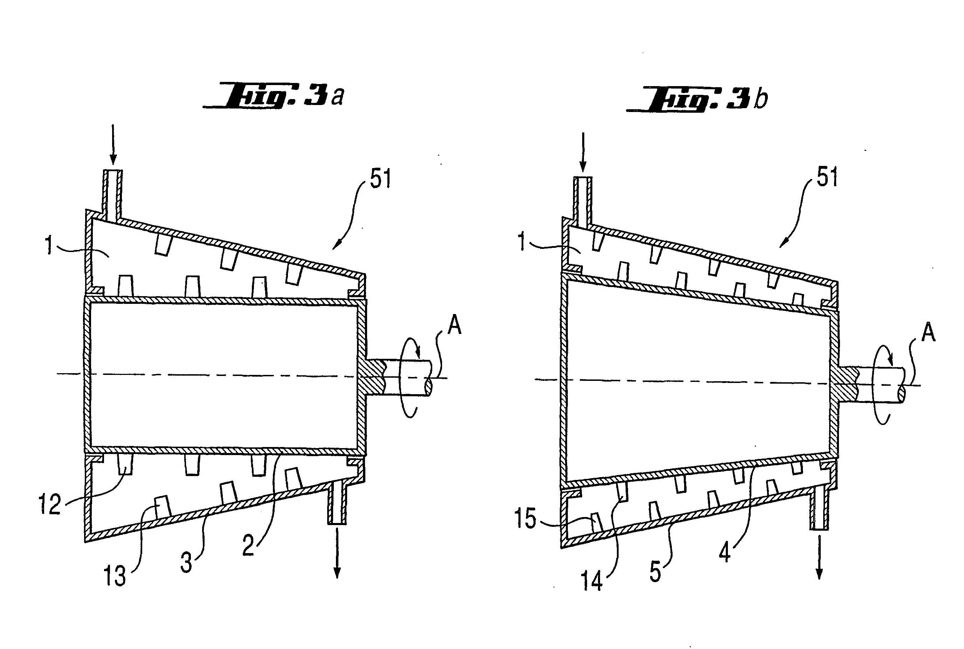

Fig. 2 zeigt das erfindungsgemässe Verfahren. Die aus dem Synthesereaktor 21 stammende, etwa 4%-ige Farbpigment-Aufschlämmung wird über eine Leitung mittels einer Pumpe 22 dem ersten Bearbeitungsbereich 51 zugeführt, der als eine spezielle Durchmischungsvorrichtung mit Scher- und Dehnwirkung mit konisch-konischer oder zylindrisch-konischer Geometrie (siehe Fig. 3a, 3b), z.B. als spezielle Art einer Stift- oder Kugelmühle, ausgebildet ist. Ausserdem wird dem ersten Bearbeitunsgbereich 51 ein lipophiles Bindemittel 53 zugeführt. Die Umbenetzung findet vorwiegend in dem ersten Bearbeitungsbereich statt. Aus dem ersten Bearbeitungsbereich 51 wird an seinem Ende 51a zum ersten Mal Wasser 54 zusammen mit Salzen aus der fliessfähigen Masse entfernt, die dann über einen Kanal von dem Ende 51a des ersten Bearbeitungsbereichs 51 zu dem Eingangsbereich 52a des zweiten Bearbeitungsbereichs 52 gelangt, der vorzugsweise durch einen Extruder gebildet ist. In seinem Eingangsbereich 52a wird dem Bearbeitungsbereich 52 erneut frisches, d.h. weitgehend salzfreies, ggfs. auch destilliertes Wasser 55 zugeführt, das dann in einem Bereich 52b des zweiten Bearbeitungsbereichs 52 als Restwasser entzogen wird. Schliesslich wird in einem weiteren Bereich 52c des zweiten Bearbeitungsbereichs 52 in ein Vakuum 57 entgast, wobei die Entgasung durch Erhitzung unterstützt wird. Bei Bedarf werden im Bearbeitungsbereich 52 noch weitere Bindemittel und/oder Öle sowie diverse Druckfarben-Additive hinzugegeben 58, so dass am Ausgang 52d des zweiten Bearbeitungsbereichs 52 eine komplette Druckfarbe 59 oder ein Druckfarbenkonzentrat entnommen werden kann.

Fig. 3a zeigt schematisch eine zylindrisch-konische Ausführungsform des ersten Bearbeitungsbereichs 51. Er wird hier durch einen Zwischenraum 1 zwischen einem inneren Zylinder 2 und einem äusseren Konus 3 bestimmt, die beide um eine gemeinsame Achse A drehbar gelagert sind. An den Oberflächen des Zylinders 2 und des Konus 3 befinden sich stiftartige Erhebungen 12 bzw. 13.

Fig. 3b zeigt schematisch eine konisch-konische Ausführungsform des ersten Bearbeitungsbereichs 51. Er wird hier ebenfalls durch einen Zwischenraum 1 gebildet, jedoch diesmal zwischen einem inneren Konus 4 und einem äusseren Konus 5, die beide um eine gemeinsame Achse A drehbar gelagert sind. An den Oberflächen des inneren Konus 4 und des äusseren Konus 5 befinden sich stiftartige Erhebungen 14 bzw. 15.

Im Betrieb wird die zu bearbeitende Aufschlämmung mittels der Pumpe 22 von links nach rechts durch den Zwischenraum 1 gepumpt. Dabei wird die Aufschlämmung sowohl bei der zylindrisch-konischen als auch bei der konisch-konischen Ausführung auf ihrem Weg durch den Zwischenraum 1 von links nach rechts abwechselnd grösseren und kleineren Scherraten ausgesetzt, da aufgrund der stiftartigen Erhebungen 12, 13 bzw. 14, 15 Bereiche grosser und kleiner Schergeschwindigkeit abwechseln. Die Pumpe 22 muss die innere Reibung der Aufschlämmung, die Reibung zwischen der Auschlämmung und den Innenflächen des Bearbeitungsbereichs 51 sowie die Zentrifugalwirkung aufgrund der konischen Geometrie überwinden.

### Bezugszeichen

- 1: Zwischenraum
- 2: Drehelement, Zylinder
- 3: Drehelement, Konus
- 4: Drehelement, Konus
- 5: Drehelement, Konus
- A: Achse
- 12: stiftartige Erhebung
- 13: stiftartige Erhebung
- 14: stiftartige Erhebung
- 15: stiftartige Erhebung
- 21: Reaktor
- 22: Pumpe
- 23: Filterpresse
- 24: Presskuchen
- 25: Abwasser
- 31: Trockner
- 32: Mühle
- 33: Pigment-Konzentrat
- 41: Z-Kneter
- 51: erster Bearbeitungsbereich
- 51a: Ende des ersten Bearbeitungsbereichs
- 52: zweiter Bearbeitungsbereich
- 52a: Eingangsbereich des zweiten Bearbeitungsbereichs
- 52b: weiterer Bereich von 52
- 52c: weiterer Bereich von 52
- 52d: Ausgang des zweiten Bearbeitungsbereichs
- 53: Bindemittel
- 54: Wasser
- 55: Wassser
- 56: Restwasser
- 57: Entgasung durch Vakuum
- 58: Druckfarben-Additive
- 59: Druckfarbe

## Patentansprüche

1. Verfahren zum kontinuierlichen Herstellen einer Druckfarbe oder eines Druckfarbenkonzentrats, bei dem der Reihe nach:
- eine lipophile Farbpigmente enthaltende wässrige Aufschlämmung und ein lipophiles Bindemittel einem ersten Bearbeitungsbereich zugeführt werden;
- der wässrigen Farbpigment-Aufschlämmung und dem Bindemittel, die dem ersten Bearbeitungsbereich zugeführt worden sind, in dem ersten Bearbeitungsbereich Scher- und Dehnströmungen aufgeprägt werden, so dass eine zumindest partielle Umbenetzung der lipophilen Farbpigmente aus der wässrigen Aufschlämmung mit dem lipophilen Bindemittel stattfindet;
- nach dem ersten Bearbeitungsbereich zum ersten Mal aus der wässrigen Aufschlämmung stammendes Wasser entfernt wird;
- die aus dem ersten Bearbeitungsbereich gewonnene teilentwässerte fliessfähige Masse einem zweiten Bearbeitungsbereich zugeführt wird, in welchem die fliessfähige Masse einer Scher-, Dehn- und Kompressionswirkung ausgesetzt wird und zum zweiten Mal mittels der partiellen Umbenetzung in dem ersten Bearbeitungsbereich als gesonderte Phase freigewordenes Wasser aus der fliessfähigen Masse entfernt wird; und
- die von dem Wasser weitgehend befreite fliessfähige Masse, in welcher die lipophilen Farbpigmente in dem lipophilen Bindemittel dispergiert sind, als Zwischen- oder Endprodukt entnommen und gesammelt wird,
**dadurch gekennzeichnet, dass** der erste Bearbeitungsbereich (51) ein Zwischenraum (1) zwischen zwei koaxialen Drehelementen (2; 3; 4, 5) ist, die relativ zueinander um ihre gemeinsame Achse (A) drehbar sind, und dass der zweite Bearbeitungsbereich (52) der Prozessraum eines Extruders ist.

2. Verfahren nach Anspruch 1, **dadurch gekennzeichnet, dass** der Farbpigmentanteil der wässrigen Aufschlämmung am Eintritt in den ersten Bearbeitungsbereich 2 bis 10%, vorzugsweise 3 bis 6% beträgt.

3. Verfahren nach Anspruch 1 oder 2, **dadurch gekennzeichnet, dass** das beim ersten Mal entfernte Wasser einen Grossteil des in der fliessfähigen Masse im ersten Bearbeitungsbereich enthaltenen Wassers darstellt, und dass in dem zweiten Bearbeitungsbereich der fliessfähigen Masse erneut Wasser hinzugegeben wird.

4. Verfahren nach Anspruch 3, **dadurch gekennzeichnet, dass** das erneut hinzugegebene Wasser destilliertes Wasser ist.

5. Verfahren nach Anspruch 3 oder 4, **dadurch gekennzeichnet, dass** das erneut hinzugegebene Wasser erhitztes Wasser ist.

6. Verfahren nach einem der vorhergehenden Ansprüche, **dadurch gekennzeichnet, dass** in dem zweiten Bearbeitungsbereich nach der zweiten Wasserentnahme ein drittes Mal Wasser entnommen wird.

7. Verfahren nach Anspruch 6, **dadurch gekennzeichnet, dass** die fliessfähige Masse nach der zweiten Wasserentnahme erhitzt wird und die dritte Wasserentnahme in Form einer Entgasung von Wasserdampf stattfindet.

8. Verfahren nach Anspruch 6 oder 7, **dadurch gekennzeichnet, dass** die dritte Wasserentnahme aus dem zweiten Bearbeitungsbereich mittels eines Vakuums im Bereich der dritten Wasserentnahme unterstützt wird.

9. Verfahren nach einem der Ansprüche 1 bis 8, **dadurch gekennzeichnet, dass** die in dem ersten Bearbeitungsbereich wirkenden Scherraten im Bereich von 1000/s bis 100.000/s, insbesondere zwischen 1000/s und 50.000/s liegen.

10. Verfahren nach einem der vorhergehenden Ansprüche, **dadurch gekennzeichnet, dass** die Intensität der Scher- und/oder Dehnströmung in dem ersten Bearbeitungsbereich stetig von einem Minimum auf ein Maximum ansteigt oder umgekehrt und anschliessend stetig oder abrupt wieder abnimmt bzw. zunimmt.

11. Verfahren nach einem der vorhergehenden Ansprüche, **dadurch gekennzeichnet, dass** es sich bei den lipophilen Farbpigmenten um Feststoffe handelt, die bei der Umbenetzung in dem ersten Bearbeitungsbereich von der wässrigen Phase in die ölige Phase eines öligen Bindemittels übergehen.

12. Verfahren nach einem der vorhergehenden Ansprüche, **dadurch gekennzeichnet, dass** mehrere Flüssigkeiten miteinander vermischt werden, bevor sie mit einer weiteren Flüssigkeit mit fein verteilten Feststoffen (Aufschlämmung) vermischt werden.

13. Verfahren nach einem der vorhergehenden Ansprüche, **dadurch gekennzeichnet, dass** in dem ersten Bearbeitungsbereich die maximale Scherrate in einem ersten Teilbereich höchstens etwa das 5-fache der minimalen Scherrate in einem zweiten Teilbereich des ersten Bearbeitungsbereichs ist und das Volumen des ersten Teilbereichs höchstens etwa das 3-fache des Volumens des zweiten Teilbereichs ist.

14. Verfahren nach einem der vorhergehenden Ansprüche, **dadurch gekennzeichnet, dass** die Temperatur in dem ersten Bearbeitungsbereich 0 bis 200°C, vorzugsweise 40 bis 90°C beträgt.

15. Verfahren nach einem der vorhergehenden Ansprüche, **dadurch gekennzeichnet, dass** der fliessfähigen Masse im zweiten Bearbeitungsbereich weitere Bindemittel und/oder Öle sowie Druckfarben-Additive hinzugegeben werden.

16. Verfahren nach einem der vorhergehenden Ansprüche, **dadurch gekennzeichnet, dass** im ersten und/oder im zweiten Bearbeitungsbereich eine Temperaturerfassung stattfindet.

17. Verfahren nach Anspruch 16, **dadurch gekennzeichnet, dass** die Temperaturerfassung einer Temperaturregelung des Verfahrens zugrunde gelegt wird.

18. Vorrichtung zum kontinuierlichen Herstellen einer Druckfarbe oder eines Druckfarbenkonzentrats, mit:
- einem ersten Bearbeitungsbereich (51), dem eine lipophile Farbpigmente enthaltende wässrige Aufschlämmung und ein lipophiles Bindemittel zuführ bar ist;
- einem Mittel (2, 3), mit dem der wässrigen Farbpigment-Aufschlämmung und dem Bindemittel, die dem ersten Bearbeitungsbereich (51) zuführbar sind, in dem ersten Bearbeitungsbereich Scher- und Dehnströmungen aufprägbar sind, so dass eine zumindest partielle Umbenetzung der lipophilen Farbpigmente aus der wässrigen Aufschlämmung mit dem lipophilen Bindemittel ermöglicht wird;
- einem Mittel, mit dem am Ende (51a) des ersten Bearbeitungsbereiches (51) zum ersten Mal aus der wässrigen Aufschlämmung stammendes Wasser entfernt werden kann;
- einem Mittel, mit dem die aus dem ersten Bearbeitungsbereich (51) gewonnene teilentwässerte fliessfähige Masse einem zweiten Bearbeitungsbereich (52) zuführbar ist, in weichem die fliessfähige Masse einer Scher-, Dehn- und Kompressionswirkung ausgesetzt werden kann, und zum zweiten Mal mittels der partiellen Umbenetzung in dem ersten Bearbeitungsbereich als gesonderte Phase freigewordenes Wasser aus der fliessfähigen Masse entfernt werden kann; und
- einem Mittel, mit dem die von dem Wasser weitgehend befreite Masse, in welcher die lipophilen Farbpigmente in dem lipophilen Bindemittel dispergiert sind, als Zwischen- oder Endprodukt entnommen und gesammelt werden kann,
**dadurch gekennzeichnet, dass** der erste Bearbeitungsbereich (51) ein Zwischenraum (1) zwischen zwei koaxialen Drehelementen (2; 3; 4, 5) ist, die relativ zueinander um ihre gemeinsame Achse (A) drehbar sind, und dass der zweite Bearbeitungsbereich (52) der Prozessraum eines Extruders ist.

19. Vorrichtung nach Anspruch 18, **dadurch gekennzeichnet, dass** die Spaltbreite des Zwischenraums (1) einstellbar ist.

20. Vorrichtung nach Anspruch 18 oder 19, **dadurch gekennzeichnet, dass** die beiden koaxialen Drehelemente (2, 3; 4, 5) jeweils ein Zylinder (2) und ein Konus (3) sind oder jeweils ein Konus (4, 5) sind, dergestalt dass sich der Zwischenraum (1) zwischen den koaxialen Drehelementen (2, 3; 4, 5) in der Produkt-Förderrichtung verjüngt oder erweitert.

21. Vorrichtung nach einem der Ansprüche 18 bis 20, **dadurch gekennzeichnet, dass** eines der Drehelemente ein Rotor (2; 4) und das andere ein Stator (3; 5) ist.

22. Vorrichtung nach einem der Ansprüche 18 bis 21, **dadurch gekennzeichnet, dass** sich von der Oberfläche des jeweiligen Drehelements (2, 3; 4, 5) stiftartige Erhebungen (12, 13; 14, 15) in den Zwischenraum (1) erstrecken, die sich bei Drehung der Drehelemente aneinander vorbei bewegen.

23. Vorrichtung nach einem der Ansprüche 18 bis 22, **dadurch gekennzeichnet, dass** sich in dem Zwischenraum (1) Kollisionskörper (6) befinden, die mit der Oberfläche und/oder den stiftartigen Erhebungen (12, 13; 14, 15) der Drehelemente (2, 3; 4, 5) zusammenstossen können.

24. Vorrichtung nach einem der Ansprüche 20 bis 23, **dadurch gekennzeichnet, dass** die Spaltbreite des Zwischenraums (1) durch eine Verschiebung der beiden Drehelemente (2, 3; 4, 5) zueinander entlang ihrer gemeinsamen Drehachse (A) einstellbar ist.

25. Vorrichtung nach einem der Ansprüche 18 bis 24, **dadurch gekennzeichnet, dass** der erste Bearbeitungsbereich (51) und der zweite Bearbeitungsbereich (52) unmittelbar aufeinanderfolgend koaxial angeordnet sind, wobei die Drehachse (A) und die Längsachse des Extruders kolinear sind.

26. Vorrichtung nach einem der Ansprüche 18 bis 25, **dadurch gekennzeichnet, dass** der Extruder ein Mehrwellenextruder ist.

27. Vorrichtung nach Anspruch 26, **dadurch gekennzeichnet, dass** das Gehäuse der aufeinanderfolgenden Bearbeitungsbereiche (51, 52) ein gemeinsames Gehäuse ist, dessen stromaufseitiger erster Gehäuseteil dem Stator (3; 5) entspricht und dessen stromabseitiger zweiter Gehäuseteil dem Extrudergehäuse entspricht.

28. Vorrichtung nach einem der Ansprüche 18 bis 27, **dadurch gekennzeichnet, dass** im ersten Bearbeitungsbereich (51) und/oder im zweiten Bearbeitungsbereich (52) mindestens ein Mittel zur Temperaturerfassung vorgesehen ist.

## Claims

1. A method for continuously manufacturing a printing ink or a printing ink concentrate, in which the sequence involves:
- routing an aqueous slurry containing a lipophilic color pigment and a lipophilic binder to a first processing area;
- exposing the aqueous color pigment slurry and the binder having been routed to a first processing area to shearing and expansion forces in the first processing area, so that the lipophilic color pigments are at least partially rewetted from the aqueous slurry with the lipophilic binder;
- removing the water stemming form the aqueous phase for the first time after the first processing area;
- routing the partially dewatered free-flowing mass obtained from the first processing area to a second processing area, where the free-flowing mass is exposed to shearing, expansion and compressive forces, and the water liberated as a separate phase is removed from the free-flowing mass a second time via the partial rewetting in the first processing area; and
- removing and collecting the free-flowing mass largely freed of water, in which the lipophilic color pigments are dispersed in the lipophilic binder, as an intermediate or end product,
**characterized in that** the first processing area (51) is an intermediate space (1) between two coaxial rotating elements (2; 3; 4; 5), which can be rotated relative to each other around their shared axis (A), and that the second processing area (52) is the processing space of an extruder.

2. The method according to claim 1, **characterized in that** the percentage of color pigment in the aqueous slurry at the inlet into the first processing area ranges from 2 to 10%, preferably 3 to 6%.

3. The method according to claim 1 or 2, **characterized in that** the water removed for the first time comprises a majority of the water contained in the free-flowing mass in the first processing area, and that water is again added to the free-flowing mass in the second processing area.

4. The method according to claim 3, **characterized in that** the additionally supplied water is distilled water.

5. The method according to claim 3 or 4, **characterized in that** the additionally supplied water is heated water.

6. The method according to one of the preceding claims, **characterized in that** water is removed for a third time in the second processing area after the second water removal.

7. The method according to claim 6, **characterized in that** the free-flowing mass is heated after the second water removal, and that the third water removal is accomplished by degassing water vapor.

8. The method according to claim 6 or 7, **characterized in that** the third water removal process from the second processing area is supported by means of a vacuum in the third water removal area.

9. The method according to one claims 1 to 8, **characterized in that** the shearing rates acting in the first processing area best range from 1,000/s to 100,000/s, preferably 1,000/s to 50,000/s.

10. The method according to one of the preceding claims, **characterized in that** the intensity of the shearing and/or expansion flow in the first processing area steadily increases from a minimum to a maximum, and then gradually or abruptly tapers off or increases again.

11. The method according to one of the preceding claims, **characterized in that** the lipophilic color pigments involve solids that pass from the aqueous phase into the oily phase of an oily binder during rewetting in the first processing area.

12. The method according to one of the preceding claims, **characterized in that** several fluids are mixed together before being mixed with another fluid with finely distributed solids (slurry).

13. The method according to one of the preceding claims, **characterized in that** the maximum shearing rate in a first partial area in the first processing area measures at most 5 times the minimum shearing rate in a second partial area of the first processing area, and the volume of the first partial area is at most about 3 times the volume of the second partial area.

14. The method according to one of the preceding claims, **characterized in that** the temperature in the first processing area measures 0 to 200°C, preferably 40 to 90°C.

15. The method according to one of the preceding claims, **characterized in that** other binders and/or oils along with printing ink additives are added to the free-flowing mass in the second processing area.

16. The method according to one of the preceding claims, **characterized in that** the temperature is measured in the first and/or second processing area.

17. The method according to claim 16, **characterized in that** the temperature is determined based on a temperature controller for the method.

18. A device for continuously manufacturing a printing ink or a printing ink concentrate, with:
- a first processing area (51) to which a lipophilic color pigment-containing, aqueous slurry and a lipophilic binder can be supplied;
- a means (2, 3) with which the aqueous color pigment slurry and the binder that can be supplied to the first processing area can be exposed to shearing and expansion flows, thereby enabling at least a partial rewetting of the lipophilic color pigments from the aqueous slurry with the lipophilic binder;
- a means with which the water stemming from the aqueous slurry can be removed for the first time at the end (51) of the first processing area (51);
- a means with which the partially dewatered, free-flowing mass obtained from the first processing area (51) can be supplied to a second processing area (52), in which the free-flowing mass can be exposed to a shearing, expansion and compression effect, and removed a second time from the free-flowing mass via partial rewetting in the first processing area as water liberated as a separate phase; and
- a means with which the largely dewatered mass in which the lipophilic color pigments are dispersed in the lipophilic binder can be removed and accumulated as the intermediate or end product,
**characterized in that** the first the first processing area (51) is an intermediate space (1) between two coaxial rotating elements (2; 3; 4, 5), which can be turned relative to each other around their shared axis (A), and that the second processing area (52) is the processing space of an extruder.

19. The device according to claim 18, **characterized in that** the gap width of the intermediate space (1) can be adjusted.

20. The device according to claim 18 or 19, **characterized in that** the two coaxial rotating elements (2, 3; 4, 5) are each a respective cylinder (2) and a cone (3) or a respective cone (4, 5), so that the intermediate space (1) between the coaxial rotating elements narrows or expands in the product conveying direction.

21. The device according to one of claims 18 to 20, **characterized in that** one of the rotating elements is a rotor (2; 4), and the other a stator (3; 5).

22. The device according to one of claims 18 to 21, **characterized in that** the surface of the respective rotating element (2, 3; 4, 5) has pin-like elevations (12, 13; 14, 15) that extend into the intermediate space (1), and move by each other as the rotating elements turn.

23. The device according to one of claims 18 to 22, **characterized in that** the intermediate space (1) has colliding bodies (6), which can impact the surface and/or the pin-like elevations (12, 13; 14, 15) of the rotating elements (2, 3; 4, 5)

24. The device according to one of claims 20 to 23, **characterized in that** the gap width of the intermediate space (1) can be adjusted by shifting the two rotating elements (2, 3; 4, 5) relative to each other along their common rotating axis (A).

25. The device according to one of claims 18 to 24, **characterized in that** the first processing area (51) and the second processing area (52) follow each other coaxially, wherein the rotating axis (A) and longitudinal axis of the extruder are collinear.

26. The device according to one of claims 18 to 25, **characterized in that** the extruder is a multiscrew extruder.

27. The device according to claim 26, **characterized in that** the casing of the consecutive processing areas (51, 52) is a shared casing, the upstream first casing section of which corresponds to the stator (3; 5), and the downstream second casing section of which corresponds to the extruder casing.

28. The device according to one of claims 18 to 27, **characterized in that** at least one means for detecting temperature is provided in the first processing area (51) and/or in the second processing area (52).

## Revendications

1. Procédé pour la fabrication continue d'une encre d'imprimerie ou d'un concentré d'encre d'imprimerie au cours duquel on procède de la façon suivante, dans l'ordre donné :
- on conduit une barbotine aqueuse contenant des pigments de couleur de lipophiles et un liant lipophile dans une première zone de traitement ;
- on applique à la barbotine aqueuse de pigments de couleur et au liant qui ont été amenés dans la première zone de traitement des écoulements de cisaillement et des écoulements d'expansion dans la première zone de traitement, pour provoquer une déshumidification au moins partielle des pigments de couleur lipophiles issus de la barbotine aqueuse avec le liant lipophile ;
- après la première zone de traitement, on élimine pour la première fois l'eau émanant de la barbotine aqueuse ;
- on amène la masse fluide partiellement asséchée obtenue dans la première zone de traitement dans une deuxième zone de traitement dans laquelle on expose la masse fluide à un effet de cisaillement, d'expansion et de compression, et pour la deuxième fois, on élimine l'eau libérée sous la forme de phase séparée dans la première zone de traitement de la masse fluide au moyen de la déshumidification partielle ; et
- on prélève et on récupère en tant que produit intermédiaire ou en tant que produit final la masse fluide largement libérée de son eau, dans laquelle les pigments de couleur lipophiles sont en dispersion dans le liant lipophile,
**caractérisé en ce que** la première zone de traitement (51) est un espace intermédiaire (51) entre deux éléments rotatifs coaxiaux (2; 3; 4; 5) qui sont rotatifs l'un par rapport à l'autre autour de leur axe commun (A) est **en ce que** la deuxième zone de traitement (52) est la chambre de travail d'une extrudeuse.

2. Procédé selon la revendication 1, **caractérisé en ce que** la fraction en pigments de couleur dans la barbotine aqueuse à l'entrée dans la première zone de traitement 2 est de jusqu'à 10 %, de préférence entre 3 et 6 %.

3. Procédé selon la revendication 1 ou 2, **caractérisé en ce que** l'eau éliminée pour la première fois représente une majeure partie de l'eau contenue dans la masse fluide dans la première zone de traitement, et **en ce que** de l'eau est à nouveau rajoutée à la masse fluide dans la deuxième zone de traitement.

4. Procédé selon la revendication 3, **caractérisé en ce que** l'eau qui a été rajoutée est de l'eau distillée.

5. Procédé selon la revendication 3 ou 4, **caractérisé en ce que** l'eau qui a été rajoutée est de l'eau réchauffée.

6. Procédé selon l'une quelconque des revendications précédentes, **caractérisé en ce qu'**après le deuxième prélèvement d'eau, de l'eau est prélevée une troisième fois dans la deuxième zone de traitement.

7. Procédé selon la revendication 6, **caractérisé en ce qu'**on réchauffe la masse fluide après le deuxième prélèvement d'eau et qu'on procède au troisième prélèvement d'eau sous la forme d'un dégazage de vapeur d'eau.

8. Procédé selon la revendication 6 ou 7, **caractérisé en ce que** le troisième prélèvement d'eau dans la deuxième zone de traitement est assisté au moyen d'un vide dans la zone du troisième prélèvement d'eau.

9. Procédé selon l'une quelconque des revendications 1 à 8, **caractérisé en ce que** les taux de cisaillement agissant dans la première zone de traitement se situent dans la fourchette de 1000/s à 100 000/s, notamment entre 1000/s et 50 000/s.

10. Procédé selon l'une quelconque des revendications précédentes, **caractérisé en ce que** l'intensité de l'écoulement de cisaillement et/ou d'expansion dans la première zone de traitement s'accroît en continu d'un minimum à un maximum ou inversement, puis augmente ou diminue en continu ou de façon abrupte.

11. Procédé selon l'une quelconque des revendications précédentes, **caractérisé en ce que** les pigments de couleur lipophiles sont des matières solides, qui lors de la déshumidification dans la première zone de traitement passent de la phase aqueuse dans la phase huileuse d'un liant huileux.

12. Procédé selon l'une quelconque des revendications précédentes, **caractérisé en ce qu'**on mélange entre eux plusieurs liquides, avant de les mélanger à un autre liquide avec des matières solides finement réparties (barbotine).

13. Procédé selon l'une quelconque des revendications précédentes, **caractérisé en ce que** le taux maximal de cisaillement dans la première zone de traitement correspond dans une première zone partielle au maximum à environ 5 fois le taux minimal de cisaillement dans la deuxième zone partielle de la première zone de traitement et le volume de la première zone de traitement correspond au maximum à environ 3 fois le volume de la deuxième zone de traitement.

14. Procédé selon l'une quelconque des revendications précédentes, **caractérisé en ce que** la température dans la première zone de traitement est de 0 à 200°C, de préférence de 40 à 90°C.

15. Procédé selon l'une quelconque des revendications précédentes, **caractérisé en ce que** dans la deuxième zone de traitement, on ajoute à la masse fluide d'autres liants et/ou huiles, ainsi que des additifs pour encres d'imprimerie.

16. Procédé selon l'une quelconque des revendications précédentes, **caractérisé en ce qu'**on procède à une détection des températures dans la première et/ou dans la deuxième zone de traitement.

17. Procédé selon la revendication 16, **caractérisé en ce que** la détection des températures sert de base à une régulation de température du procédé.

18. Dispositif pour la fabrication continue d'une encre d'imprimerie ou d'un concentré d'encre d'imprimerie, avec :
- une première zone de travail (51) vers laquelle on peut amener une barbotine contenant des pigments de couleur lipophiles et un liant lipophile ;
- un moyen (2, 3) permettant d'appliquer dans la première zone de traitement à la barbotine aqueuse de pigments de couleur et au liant pouvant être amenés vers la première zone de traitement (51) des écoulements de cisaillement et d'expansion, pour permettre au moins une déshumidification partielle des pigments de couleur lipophiles hors de la barbotine aqueuse avec le liant lipophile ;
- un moyen permettant d'éliminer pour la première fois l'eau émanant de la barbotine aqueuse, à la fin (51a) de la première zone de traitement (51) ;
- un moyen permettant d'amener la masse fluide obtenue à l'issue de la première zone de traitement (51) vers la deuxième zone de traitement (52), dans laquelle la masse fluide est exposée à un effet de cisaillement, d'expansion et de compression et pour la deuxième fois l'eau libérée dans la première zone de travail sous la forme d'une phase séparée peut être éliminée de la masse fluide au moyen de la déshumidification partielle ; et
- un moyen permettant de prélever et de récupérer la masse libérée de l'eau dans laquelle les pigments de couleur lipophiles sont en dispersion dans le liant lipophile en tant que produit intermédiaire ou en tant que produit final,
**caractérisé en ce que** la première zone de traitement (51) est un espace intermédiaire (51) entre deux éléments rotatifs coaxiaux (2; 3; 4; 5) qui sont rotatifs l'un par rapport à l'autre autour de leur axe commun (A) est **en ce que** la deuxième zone de traitement (52) est la chambre de travail d'une extrudeuse.

19. Dispositif selon la revendication 18, **caractérisé en ce que** la largeur d'interstice de l'espace intermédiaire (1) est réglable.

20. Dispositif selon la revendication 18 ou 19, **caractérisé en ce que** les deux éléments rotatifs coaxiaux (2, 3 ; 4, 5) sont respectivement un cylindre (2) et un cône (3) ou sont respectivement un cône (4, 5, de façon à ce que l'espace intermédiaire (1) entre les éléments rotatifs coaxiaux (2, 3 ; 4, 5) se rétrécisse ou s'élargisse dans le sens de transport du produit.

21. Dispositif selon l'une quelconque des revendications 18 à 20, **caractérisé en ce que** l'un des éléments rotatifs est un rotor (2; 4) est **en ce que** l'autre est un stator (3 ; 5).

22. Dispositif selon l'une quelconque des revendications 18 à 21, **caractérisé en ce que** des élévations sous forme de tiges (12, 13 ; 14, 15) qui lors de la rotation des éléments rotatifs se déplacent les uns devant les autres, s'étendent de la surface de l'élément rotatif respectif (2, 3 ; 4, 5) dans l'espace intermédiaire.

23. Dispositif selon l'une quelconque des revendications 18 à 22, **caractérisé en ce que** des corps de collision (6) qui peuvent entrer en collision avec la surface et/ou avec les élévations sous forme de tiges (12, 13 ; 14, 15) des éléments rotatifs (2, 3 ; 4, 5) se trouvent dans l'espace intermédiaire (1).

24. Dispositif selon l'une quelconque des revendications 20 à 23, **caractérisé en ce que** la largeur d'interstice de l'espace intermédiaire (1) est réglable par déplacement des deux éléments rotatifs (2, 3 ; 4, 5) l'un vers l'autre, le long de leur axe de rotation commun (A)

25. Dispositif selon l'une quelconque des revendications 18 à 24, **caractérisé en ce que** la première zone de traitement (51) et la deuxième zone de traitement (52) sont disposées de façon coaxiale directement consécutive, l'axe de rotation (A) et l'axe longitudinal de l'extrudeuse étant co-linéaires.

26. Dispositif selon l'une quelconque des revendications 18 à 25, **caractérisé en ce que** l'extrudeuse est une extrudeuse à plusieurs arbres.

27. Dispositif selon la revendication 26, **caractérisé en ce que** le carter des zones de traitement consécutives (51, 52) est un carter commun, dont la première partie de carter en amont correspond au stator (3 ; 5) et dont la deuxième partie de carter en aval correspond au carter de l'extrudeuse.

28. Dispositif selon l'une quelconque des revendications 18 à 27, **caractérisé en ce que** dans la première zone de traitement (51) et/ou dans la deuxième zone de traitement (52), on a prévu au moins un moyen pour détecter la température.
